# EUROPEAN PATENT APPLICATION

(11) **EP 3 617 965 A1**
(43) Date of publication of application: **04.03.2020**
(21) Application number: 19185443.9
(22) Date of filing: 10.07.2019
(51) Int. Cl.: G06Q 10/06

(54) **PERFORMANCE MEASUREMENT DEVICE, PERFORMANCE MEASUREMENT METHOD AND PERFORMANCE MEASUREMENT PROGRAM**

(30) Priority: 31.08.2018 JP 2018163163
(71) Applicant: OMRON Corporation, Shiokoji-dori, Shimogyo-ku Kyoto-shi Kyoto 600-8530 (JP)
(72) Inventor: Kotake, Yasuyo, Kyoto, 619-0283 (JP)
(74) Representative: Hoffmann Eitle

(57) **Abstract**

A performance measurement device (1) is provided with a data acquisition unit (111) configured to acquire sensing data (121) obtained from one or a plurality of sensors (30; 31) configured to measure an activity relating to at least one of sensory activity and physical activity of a target operator (50; 51) while said target operator (50; 51) executes a task (40), said task (40) including a plurality of basic operations; an index calculating unit (112) configured to analyze the sensing data (121) acquired to thereby calculate a performance index from the sensing data (121), the performance index indicating a degree of performance for the basic operations achieved through said activity; and a storage processor (113) configured to store the target operator (50; 51), the task (40), and the performance index calculated for each of the basic operations in association in a predetermined storage area (70).

## Description

### FIELD

The present invention relates to a performance measurement device, a performance measurement method and a performance measurement program.

### BACKGROUND

Japanese Patent Publication No. 2007-293690 proposes a personnel assignment system for assigning workers to work processes. More specifically, the personnel assignment system proposed in JP 2007-293690 A calculates a takt time on the basis of the number of production units scheduled, assigns basic operations to a plurality of work steps on the basis of the tact time and the standard work time for each basic operation; and based on the tact time and the cycle time of each basic step for each of the workers, determines how to assign the workers to each of the work steps assigned basic operations. The personnel assignment system thus assigns workers to work steps so that there are no impediments to the overall production plan.

### Technical Problem

The inventors discovered that existing systems, such as the one described in JP 2007-293690 A have the following drawbacks. That is, in the conventional system the processing time for a given task is used as a measure of ability (level of proficiency) of a person performing tasks. In other words, existing systems evaluate shorter processing times as indicating a higher ability in a task, while evaluating longer processing times as indicating a lower ability in the task. The processing time for a task may be used for objective and quantitative assessment of whether or not a person can complete said task within a predetermined time.

However, the processing time for a task does not include information on the person's actual process of performing the task. That is, the processing time for a task does not include information that objectively and quantitatively indicates what ability a person has in performing each task (in other words, the kind of skills the person possesses in relation to each task). Therefore, it has not been possible to objectively assess from the information indicating the processing time for a task, what a person is careful about or what actions must be performed in order to suitably execute the task. Thus, the inventors discovered that existing systems are unable to provide objective and repeatable techniques to improve a person's abilities in relation to a task. Consequently, the inventors also discovered that this disadvantage makes it difficult for existing systems to systematically improve or maintain the productivity and efficiency of a production line.

Note that these disadvantages do not only exist when improving or maintaining the productivity and efficiency of a production line. These disadvantages manifest in any setting where a person executes some kind of task. For example, this may apply to a driver operating a vehicle. If it were possible to objectively and quantitatively assess the ability of the driver to operate a vehicle, then it would be possible to require the driver to make up for any deficiencies in ability or compensate for the deficiencies through the vehicle operation; thereby the quality of operating the vehicle could be systematically improved or maintained.

In view of the foregoing embodiments of the present invention provide techniques for objectively and quantitatively measuring the ability of a person to perform a task.

### SUMMARY

To address the above described disadvantages, an embodiment of the present invention is configured as follows.

A performance measurement device according to an aspect of the present invention includes a data acquisition unit configured to acquire sensing data obtained from one or a plurality of sensors configured to measure an activity relating to at least one of sensory activity and physical activity of a target operator while said target operator executes a task, said task including a plurality of basic operations; an index calculating unit configured to analyze the sensing data acquired to thereby calculate a performance index from the sensing data, the performance index indicating a degree of performance for the basic operations achieved through said activity; and a storage processor configured to store the target operator, the task, and the performance index calculated for each of the basic operations in association in a predetermined storage area.

A performance measurement device according to the above configuration uses one or a plurality of sensors to measure at least one of sensory activity and physical activity of a target operator while the target operator is executing a task. Sensory activity involves recognizing the attributes of an object such as the position, shape, size and texture; and allows for some kind of assessment to be made based on the result of the recognition. Sensory activity is achieved through using primarily sensory systems for vision, hearing, touch, or the like. Physical activity involves moving the body to change the positional relationship with an object, and involves physically affecting an object. Physical activity is achieved through using the musculoskeletal system which is made up primarily the tissues and organs related to moving the body, the such as the bones, muscles, joints, and nerves. That is, the sensory activity and physical activity each represent the behavior of the sensory system and the musculoskeletal system as physiological parameters. Therefore, the sensory activity and the physical activity can be measured by way of the behavior of the sensory system and the musculoskeletal system using sensors.

The sensing data obtained through the above measurement can indicate the performance of at least one of the sensory activity and the physical activity. The performance of the sensory activity and the physical activity correlates to the results of whether or not a task can be suitably accomplished. That is, the higher the performance of the sensory activity and the physical activity, the greater the ability to accomplish a task, and the lower the performance of the sensory activity and the physical activity, the lesser the ability to accomplish a task. Therefore, a performance measurement device according to the above configuration analyses the sensing data obtained to calculate a performance index from the sensing data for each of the basic operations included in a task.

The performance index can be used to objectively and quantitatively indicate the ability of a target operator with respect to the basic operations. Accordingly, performance indexes obtained for the basic operations included in a task can objectively and quantitatively indicate the ability, which is how a target operator performs that task. For example, it is possible to indicate in which of a plurality of basic operations contained in a task a target operator has strong ability or weak ability.

Therefore, a performance measurement device according to the above configuration can objectively and quantitatively measure the ability of a person executing a task. Thus, it is possible to objectively know where to caution the target operator or what kind of movements must be performed in order to execute a task appropriately. Therefore, for instance, it is possible to systematically improve or maintain the productivity and efficiency of the production line in the above mentioned production floor example. It is also possible to systematically improve or maintain the quality of the driving operation performed by a driver in the driving example.

A task may also be achieved from a series of sensory activity and physical activity. Thus, the process of executing a task may be expressed as a combination of a plurality of types of sensory activity and physical activity. The basic operations may then be defined from a combination of sensory activity and physical activity. A task is preferably a process that is repeatedly executed; for instance, a work step on a production floor, or driving a vehicle. The combination of the same types of sensory activity and physical activity may manifest each time a task is executed when a person repeatedly executes the same task. A segment expressing a combination of the same types of activity within executing these tasks may be output as a segment where a common basic operation (i.e. the same type of basic operation) is being performed. Each of the basic operations included in a task may also be ordered in a time series. When a person is somewhat used to a particular work step, the result of performing the basic operation may be entered into the subsequent basic operation. The degree of performance in the basic operations, which can be represented by a performance index, corresponds to the level of ability in suitably accomplishing each of the basic operations.

The type of sensor is not particularly limited, as long as the sensor is capable of measuring a physiological parameter relating to at least one of the sensory activity and the physical activity of the target operator; the type of sensor may be selected as appropriate in accordance with the form of implementation. The behavior of the sensory systems may be expressed for instance through brain waves, cerebral blood flow, pupil diameter, gaze direction, facial expression, voice, electrocardiogram, blood pressure, electromyograph, a galvanic skin reflex (GSR), or the like. Therefore, the one or plurality of sensors for measuring sensory activity may be for example: an electroencephalographic meter (EEG); a magnetoencephalographic meter (MEG); a magnetic resonance imaging device configured to use functional magnetic resonance imaging (fMRI) to take images of the blood flow in relation to brain activity; a brain activity measurement device configured to use functional near infrared spectroscopy (fNIRS) to measure cerebral blood flow; a gaze sensor configured to measure pupil diameter and gaze direction; an electrooculographic sensor; a microphone; an electrocardiographic meter, a blood pressure meter; an electromyographic sensor; a galvanic skin reflex meter; and a camera. In contrast, the behaviors and physical activities may be expressed with the musculoskeletal system, such as the finger, hand, leg, neck, waist, joints, or muscles. Therefore, the one or plurality of sensors for measuring physical activity may be for instance a camera, motion capture device, load cell or a combination of these.

The predetermined storage area may be selected is appropriate in accordance with the form of implementation so long as the predetermined is capable of storing the performance index calculated for each of the basic operations. A primary storage device may be selected for the predetermined storage area when the performance index calculated for each of the basic operations is to be stored temporarily. An auxiliary storage device, external storage device, or various types of media or a combination of these may be selected as the predetermined storage area when the performance index calculated for each of the basic operations is to be stored long-term.

The performance measurement device according to the above configuration may also include: a determination unit configured to compare a performance index required for a basic operation to suitably accomplish the task and the performance index calculated for the target operator performing the basic operation to determine whether or not the target operator is able of suitably accomplish the task; and an output unit configured to output information related to the result of the determination. Given said configuration, it is possible to optimize performing a given task on the basis of the results of determining whether or not the target operator is able to suitably accomplish the given task.

In a performance measurement device according to the above aspect, the data acquisition unit uses one or a plurality of sensors to measure the activity of a skilled operator able to suitably accomplish the task while the skilled operator executes the task to thereby acquire sensing data; and the index calculation unit analyses the sensing data acquired from the skilled operator to thereby calculate a performance index of the skilled operator for each of the basic operations. The performance measurement device according to the above aspect may further include a registration unit configured to register the performance index of the skilled operator calculated for each of the basic operations as the performance index required for each of the basic operations. Given this configuration, it is possible to suitably establish a performance index required for each of the basic operations to suitably accomplish a task; hereby it is possible to precisely determine whether or not a target operator can suitably accomplish a given task.

The performance measurement device according to the above aspect configured so that each of the basic operations is defined to include a human cognitive process for at least one cycle; and the data acquisition unit acquires sensing data obtained by using a plurality of sensors to measure an activity relating to the sensory activity and the physical activity of the target operator. Given this configuration, it is possible to appropriately define each of the basic operations included in a task, and to appropriately acquire sensing data used for calculating a performance index for each of the basic operations. It is thereby possible to precisely measure the ability of a person to perform a task.

The performance measurement device according to the above aspect configured so that analyzing the sensing data includes evaluating at least any one of the correctness, stability, speed, and rhythm of executing the basic operations; and the index calculating unit calculates the performance index for each of the basic operations in accordance with the result of the evaluation. Given this configuration, it is possible to appropriately calculate a performance index for each of the basic operations whereby it is possible to precisely measure the ability of a person to accomplish a task.

The performance measurement device according to the above aspect configured so that analyzing the sensing data includes: converting the sensing data into time series feature data; analyzing the time series feature data to thereby identify the execution time, time overlap, number of executions, and execution order of the basic operations; and evaluating the correctness, stability, speed, and rhythm of execution for each of the basic operations on the basis of the execution time, time overlap, number of executions, and execution order for the basic operations; and the index calculating unit calculates the performance index for each of the basic operations in accordance with the result of the evaluation. Given this configuration, it is possible to appropriately calculate a performance index for each of the basic operations whereby it is possible to precisely measure the ability of a person to accomplish a task.

The performance measurement device according to the above aspect configured so that the one or plurality of sensors is made up one or a combination of a camera, a microphone, an electroencephalography meter, a magnetoencephalographic meter, a magnetic resonance imaging device, an electrocardiography meter, a blood pressure meter, a galvanic skin reflex meter, an electromyographic sensor, a load cell, a motion capture device, a brain activity measurement device, a gaze sensor, and an electrooculographic sensor. Given this configuration, it is possible to appropriately acquire the sensing data used for calculating a performance index for each of the basic operations.

The performance measurement device according to the above aspect configured so that the target operator is a target operator on a production line; the task is a work step in a stage on a production line; the data acquisition unit uses the one or the plurality of sensors to measure the activity of the worker while the worker is executing the work step on the production line to thereby acquire sensing data; and the index calculating unit analyzes the sensing data acquired from the worker to calculate a performance index for each of the basic operations. Given this configuration it is possible to objectively and quantitatively measure the ability (of a worker) performing the work step in a stage on the production line, and to thereby systematically improve or maintain the productivity and efficiency on the production line.

The performance measurement device according to the above aspect configured so that the target operator is driver operating a vehicle, the task is the driving of the vehicle; the data acquisition unit uses the one or the plurality of sensors to measure the activity of the driver while the driver is operating the vehicle to thereby acquire sensing data; and the index calculating unit analyzes the sensing data acquired from the driver to calculate a performance index for each of the basic operations. Given this configuration it is possible to objectively and quantitatively measure the ability (of a driver) performing the driving operation on the vehicle, and to thereby systematically improve or maintain the productivity and efficiency the driver operating the vehicle.

As another implementation of the performance measurement device of the above embodiments, one aspect of the present invention may be an information processing method or a program that implements the above configuration, or a computer readable recording medium that stores such a program. The computer readable recording medium may be a medium whereon the information for the program or the like is accumulated via electrical, magnetic, optical, mechanical, or chemical processes so that a computer, another device, or a machine is capable of reading the information recorded in the program or the like.

For instance, a performance measurement method according to an aspect of the present invention causes a computer to execute steps including: acquiring sensing data obtained from one or a plurality of sensors configured to measure an activity relating to at least one of sensory activity and physical activity of a target operator while said target operator performs a task, said task including a plurality of basic operations; analyzing the sensing data acquired to thereby calculate a performance index from the sensing data, the performance index indicating a degree of performance for the basic operations achieved through said activity; and storing the target operator, the task, and the performance index calculated for each of the basic operations in association in a predetermined storage area.

For instance, a performance measurement program according to an aspect of the present invention causes a computer to execute steps including: acquiring sensing data obtained from one or a plurality of sensors configured to measure an activity relating to at least one of sensory activity and physical activity of a target operator while said target operator performs a task, said task including a plurality of basic operations; analyzing the sensing data acquired to thereby calculate a performance index from the sensing data, the performance index indicating a degree of performance for the basic operations achieved through said activity; and storing the target operator, the task, and the performance index calculated for each of the basic operations in association in a predetermined storage area. Effects

The present invention makes it possible to objectively and quantitatively measure the ability of a person to perform a given task.

### BRIEF DESCRIPTION OF THE DRAWINGS

FIG. 1 schematically illustrates an example of a setting where the present invention may be adopted;
FIG. 2 schematically illustrates steps in the human cognitive process;
FIG. 3 schematically illustrates an example of a plurality of basic operations making up a task;
FIG. 4 schematically illustrates an example of a hardware configuration for a performance measurement device according to an embodiment; FIG. 5 schematically illustrates an example of a software configuration for a performance measurement device according to the embodiment;
FIG. 6 schematically illustrates an example of processing sequence during the measurement mode of a performance measurement device according to the embodiment;
FIG. 7 schematically illustrates an example of a processing sequence that analyzes sensing data according to the embodiment;
FIG. 8 schematically illustrates an example of sensing data;
FIG. 9 schematically illustrates an example of time series feature data;
FIG. 10 schematically illustrates an example of a process of mastering a task;
FIG. 11A schematically illustrates an example of a method for evaluating the correctness of an execution of a basic operation;
FIG. 11B schematically illustrates an example of a method for evaluating the stability of an execution of a basic operation;
FIG. 11C schematically illustrates an example of a method for evaluating the speed of an execution of a basic operation;
FIG. 11D schematically illustrates an example of a method for evaluating the rhythm in an execution of a basic operation;
FIG. 12A illustrates an example of the relationship between the difficulty of a sensory activity and a standard value for a performance index;
FIG. 12B illustrates an example of the relationship between the difficulty of a physical activity and a standard value for a performance index;
FIG. 13 schematically illustrates an example of a proficiency database according to the embodiment
FIG. 14 schematically illustrates an example of a processing sequence during a registration mode of a performance measurement device according to the embodiment;
FIG. 15 schematically illustrates an example of a processing sequence during an operation mode of a performance measurement device according to the embodiment; and
FIG. 16 schematically illustrates a modified example of a setting where the present invention may be adopted.

### DETAILED DESCRIPTION

An embodiment (below, "the embodiment") according to an aspect of the invention is described below on the basis of the drawings. However, at all points the embodiment described below is merely an example of the invention. It goes without saying that various modifications and variations are possible without departing from the scope of the invention. That is, specific configurations may be adopted as appropriate in accordance with the embodiment when implementing the invention. Note that the data that appears in the embodiment is described in natural language; however, these descriptions point to virtual languages, commands, parameters, machine language and the like that may be recognized by a computer.

### 1. Example Application

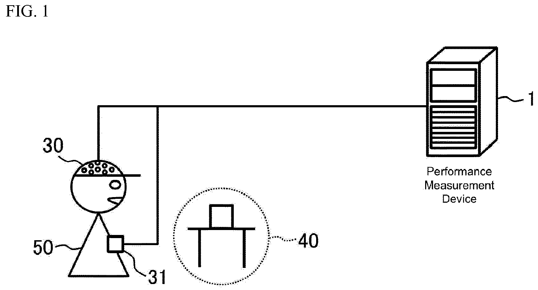

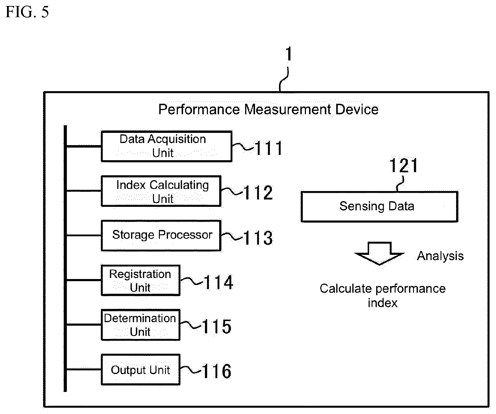

First, an example of where the present invention may be adopted is described using FIG. 1. FIG. 5 schematically illustrates an example of where a performance measurement device 1 according to the embodiment may be adopted. The example illustrated in FIG. 1 assumes a setting where the performance of a worker 50 performing a work step 40 is measured. The work step 40 is during a stage on a production line. The worker 50 is one example of the target operator in the invention, and the work step 40 during a stage on the production line is an example of a task in the invention. However, the target operator for which the invention may be adopted is not limited to this kind of example. The target operator and task may be established as appropriate in accordance with the form of implementation.

The performance measurement device 1 according to the embodiment obtains sensing data (sensing data 121, later described) that be acquired by using one or a plurality of sensors to measure at least one of sensory activity and physical activity while the worker 50 executes the work step 40 on the production line. The work step 40 may be soldering, fitting cases, inserting parts for insertion, inspection, packaging, or the like. An electroencephalogram 30 (EEG 30) and a load cell 31 are the sensors acquiring sensing data in the example in FIG. 1. The EEG 30 and load cell 31 are each an example of a sensor used in the invention.

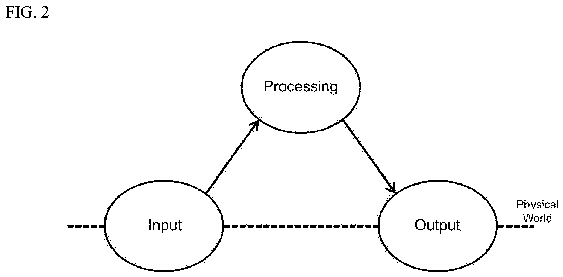

The sensory activity and physical activity measured by the sensors is described here with additional reference to FIG. 2. FIG. 2 schematically depicts a model representing the human cognitive process; as illustrated in FIG. 2, the human cognitive processing of information can be modeled by the following three steps. That is, in the first step input data is acquired via the input system. An input system is primarily a sensory system. Next, in the second step the processing system (the brain) processes the input data acquired from the input system. In the third step, the results of information processing performed by the processing system is output via the output system. The output system is primarily the musculoskeletal system (and the brain).

According to this model, sensory activity and physical activity can be defined as follows. That is, sensory activity involves using sensory systems such as vision, hearing, and touch as the input system to acquire input data from an object; the processing system processes the input data to recognize attributes of the object such as location, shape, size, and texture; and the processing of information, e.g., decision making, by the processing system is carried out on the basis of the result of what was recognized. Recognition within sensory activity includes spatial recognition and shape recognition of the target. Spatial recognition involves recognizing the attributes concerning a target in a space such as the location, moving speed, or the like. Shape recognition involves recognizing the attributes concerning the form of the target, such as the shape, size, and texture of the target. In contrast, where musculoskeletal system is the system and organs involved in movement of the body, such as the bones, muscles, joints, and nerves, physical activity uses the musculoskeletal system as the output system to move the body on the basis of the above recognition results, or to carry out the above recognition. Thus, physical activity involves moving the body and physically affecting an object or changing the positional relationship with the object.

Humans repeatedly perform this process of cognitive information processing along with the sensory activity and physical activity when accomplishing a task. As illustrated in FIG. 2, the input system (primarily a sensory system) and the output system (primarily the musculoskeletal system) function as the interface with the physical world while a person is performing a task. Therefore, the above sensory activity and physical activity may be measured by the behaviors of the input system and the output system. Given the above-mentioned relationship between the input system, the processing system, and the output system, it is possible to indirectly evaluate the quality of information processing performed by the processing system in relation to a task by using sensors to monitor at least one of sensory activity and physical activity.

That is, the sensing data obtained from measuring at least one of the sensory activity and physical activity using one or a plurality of sensors may be used to indicate the performance in at least one of the sensory activity and physical activity in relation to a task. The performance of the sensory activity and the physical activity correlates to the results of whether or not a task can be suitably accomplished. That is, the higher the performance of the sensory activity and the physical activity, the better the quality of information processing performed by the processing system in relation to the task, and the higher the ability to accomplish the task (i.e., the task can be suitably accomplished). Whereas, the lower the performance in the sensory activity and the physical activity, the worse the quality of information processing performed by the processing system in relation to the task, and the lower the ability to accomplish the task (i.e., the task cannot be suitably accomplished). Accordingly, it is possible to evaluate the quality of the above mentioned information processing in relation to the task; in other words, it is possible to objectively and quantitatively evaluate the level of ability in executing a task on the basis of sensing data obtained by using one or a plurality sensors to measure at least one of the sensory activity and the physical activity.

A task may also be achieved from a series of sensory activity and physical activity. The process of executing a task may be expressed as a combination of a plurality of types of sensory activity and physical activity. Therefore, it is possible to take a task as a plurality of basic operations. The basic operations may then be defined from a combination of sensory activity and physical activity. The combination of the same types of sensory activity and physical activity may manifest each time a task is executed when a person repeatedly executes the same task. A segment expressing a combination of the same types of activity within executing these tasks may be output as a segment where a common basic operation (i.e. the same type of basic operation) is being performed. Therefore, tasks are preferably repeated in order to facilitate extracting the basic operations.

And, the human cognitive process can be performed for a plurality of cycles while accomplishing a task. Thus, the basic operations are defined to include the human cognitive process for at least one person for one cycle in order to facilitate identifying the basic operations included in a task. At this point, the basic operations may be aligned sequentially in a time series, and the results of performing the basic operation taken as input for the next basic operation. In the present embodiment, the basic operations (each of the four basic operations below) contained in a task (i.e., a work step 40) are defined as being contained in at least one cycle of a human cognitive information processing process, and are defined by a combination of sensory activity and physical activity.

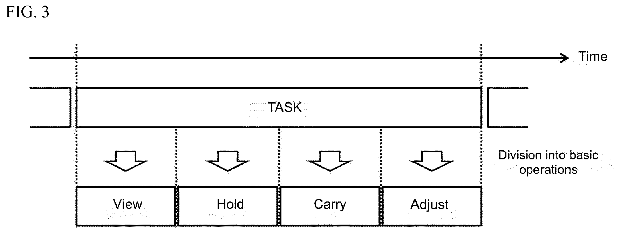

A concrete example of a basic operation is described with reference to FIG. 3. FIG. 3 schematically illustrates an example of a plurality of basic operations making up a work step 40 (task); As provided by the example illustrated in FIG. 3, a task work step 40 (task) is divided into four types of basic operations: "view", "hold", "carry", and "adjust". In the example illustrated in FIG. 3, the basic operations of View, Hold, Carry, and Adjust are aligned in sequence order in a time series (along a time axis).

"View", is primarily the activity of recognizing the attributes of an object in the work step 40. The sensory activity during "View" may involve, for instance, recognizing attributes of the object such as the position, shape, and size through sight or sound. In contrast, the physical activity during "View" may involve moving the body by changing the direction of the gaze, changing the angle of the neck, or pointing to and confirming the object, or the like in order to perform spatial recognition and shape recognition. The sensory activity of "View" may also include recognizing attributes such as the texture of an object via touch, by placing the finger near the object or using the finger to touch the object.

"Hold", is primarily the activity of holding the object in the work step 40 on the basis of the results of "View". The sensory activity during "Hold" may involve, for instance using touch to recognize the texture of the object for the work while determining a position to hold said object on the basis of spatial recognition and shape recognition of the object via site and touch. In contrast, the physical activity involved in "Hold" may be to move a part of the body such as the hand or the finger on holding the object so that the object does not fall on the basis of the above results. Of the sensory activity.

"Carry", is primarily the activity of holding the object in the work step 40 on the basis of the results of "View". The sensory activity during "Carry" may involve determining a location of the destination for the object (target position) on the basis of the results of spatial recognition of the object. In contrast, the physical activity during "Carry" may involve moving a part of the body such as the arm, leg, or waist to carry an object being held from the current position to a target position.

"Adjust", is primarily the activity of changing the subsequent condition of the object to a target condition. The sensory activity during "Adjust" may involve, for instance, using sight or touch to recognize a change in the condition of the position, angle, or shape of the object. In contrast, the physical activity during "Adjust" may involve moving a part of the body such as the finger, or the like, while causing changes to the condition of the target object until the object is in the target condition.

A work step 40 during a stage on the production line may be executed via a combination of the above four basic operations. One specific example, is a setting where a worker 50 performs soldering. In this case, "View" involves performing spatial recognition and shape recognition of the object whereon the soldering iron will be placed and that will be soldered; "Hold", means to hold the soldering iron; "Carry", means to carry the soldering iron to the object; and "Adjust" means changing the position and angle of the soldering iron. This series of basic operations may be executed to thereby perform soldering.

It is possible for a combination of the above four basic operations to be executed for work other than soldering or for tasks that include other operations in a stage on the production line. However, the type, number, combination, and sequence of the basic operations are not particularly limited to these examples and may be established as appropriate in accordance with the form of implementation. For example, a sequence of basic operations may be defined where "View" is performed after "Adjust". Dividing a task into a plurality of basic operations makes it possible to express a process for executing a task with a combination of basic operations. It is thus possible to evaluate the above activities of a person during the process of executing a task. For a plurality of types of tasks, each of the tasks may be divided into a plurality of basic operations whereby different tasks may be expressed with a common metric (a basic operation), and thus the ability of a person in relation to the tasks may be evaluated based on this common metric.

The performance measurement device 1 according to the embodiment analyzes the sensing data obtained from the worker 50. Using the sensing data, the performance measurement device 1 thus computes a performance index indicating the level of performance of the basic operations achieved through the above-mentioned activities. The performance measurement device 1 associates the worker 50 (target operator), the work step 40 (task), and the performance indicated performance index for the basic operations that was calculated, and stores these in a memory area.

The performance index (i.e., the level of performance in relation to the basic operations) corresponds to whether or not the basic operations included in a work step 40 can be suitably executed; in other words, the performance index corresponds to the level of ability in executing the basic operations. The performance index can be used to objectively and quantitatively indicate the ability of a worker 50 with respect to the basic operations. Accordingly, performance indexes obtained for the basic operations included in a work step 40 can objectively and quantitatively indicate the ability, which is how a worker 50 performs that work step 40. For example, it is possible to indicate in which of the four basic operations contained in a soldering step a worker 50 has strong ability or has weak ability.

Therefore, the performance measurement device 1 according to the embodiment can objectively and quantitatively measure the ability of a worker 50 performing a work step 40. Thus, it is possible to objectively know where to caution the worker 50 or what kind of movements must be performed in order to execute a work step 40 appropriately. Therefore, the embodiment is capable of systematically improving or maintaining the productivity and efficiency of a production line on the production floor.

Note that as above described, the basic operations in the embodiments are defined from a combination of sensory activity and physical activity. Therefore, preferably both sensory activity and physical activity are measured instead of measuring only sensory activity or only physical activity in order to accurately compute the performance index for the basic operations. Therefore, in the embodiment, the performance measurement device 1 can acquire sensing data obtained by using a plurality of sensors to measure the activity of, e.g., the sensory activity and physical activity of the worker 50. More specifically, in the embodiment the EEG 30 can be used to measure the sensory activity of the worker 50. Further, the load cell 31 can be used to measure the physical activity of the worker 50. However, the combination of the plurality of sensors used for measuring the sensory activity and the physical activity of the target operator is not limited to this example; the combination of the plurality of sensors may be selected as appropriate in accordance with the form of implementation.

### 2. Example Configuration

### Hardware Configuration

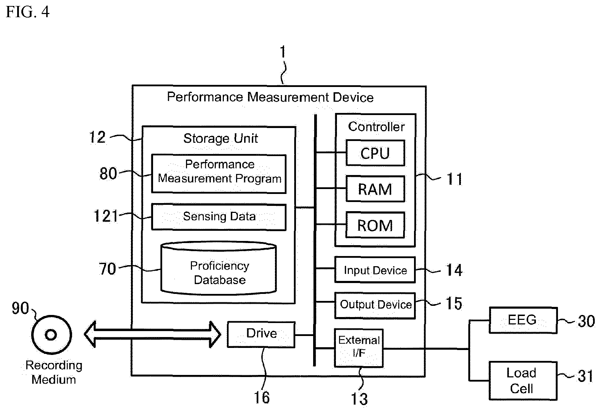

Next an example of the hardware configuration for the performance measurement device 1 according to the embodiment is describes using FIG. 4. FIG. 4 schematically illustrates an example of a hardware configuration for a performance measurement device 1 according to an embodiment.

As illustrated in FIG. 4 the performance measurement device 1 according to the embodiment is a computer with a controller 11, a storage unit 12, an external interface 13, an input device 14, an output device 15, and a drive 16 electrically connected thereto. Note that in FIG. 4 the external interface is noted as an "external I/F".

The controller 11 includes a central processing unit (CPU) that is a hardware processor, random access memory (RAM), and read only memory (ROM), or the like; the controller 11 is configured to process information on the basis of a program and various kinds of data. The storage unit 12 is one example of memory and, for example may be constituted by a hard drive or a solid state drive or the like. The storage unit 12 in the embodiment stores various information such as a performance measurement program 80, sensing data 121, a proficiency database 70, and the like.

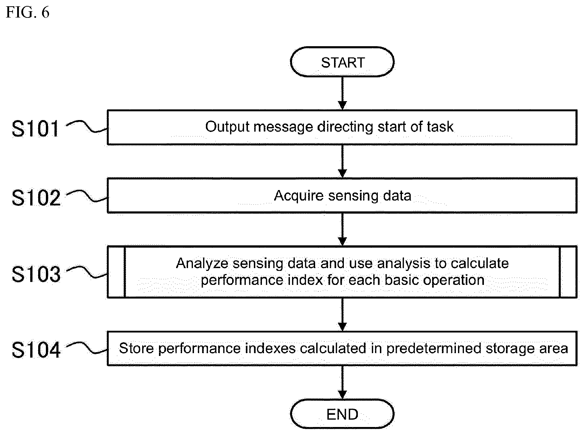

The performance measurement program 80 causes the performance measurement device 1 to process information (later described; FIG. 6, FIG. 7, FIG. 14, and FIG. 15) for measuring the performance index of a target operator with respect to the basic operations of a task. The performance measurement program 80 includes a series of commands for processing information. The sensing data 121 represents the behavior of the target operator with respect to at least one of sensory activity and physical activity while the target operator executes the task. The proficiency database 70 stores the performance index in association with the task and the target operator where the performance index was measured by executing the performance measurement program 80. The details are described later.

The external interface 13 may be a universal serial bus (USB) port, or a dedicated port, or the like, and is for connection to an external device. The types and number of the external interface 13 may be selected as appropriate in accordance with the types and number of external devices for connection. The performance measurement device 1 in the embodiment is connected to the EEG 30 and the load cell 31 via the external interface 13.

The EEG 30 may be mounted on the head of the worker 50 and used to measure the amount of brain activity of the worker 50. The amount of brain activity measured pertains primarily to the sensory activity of the worker 50. The load cell 31 may be mounted to a part of the body, such as the hands, or the like of the worker 50 and used to measure the force (load) applied to said part of the body. The force measured pertains primarily to the physical activity of the worker 50. The types of EEG 30 and load cell 31 are not particularly limited and may be selected as appropriate in accordance with the form of implementation.

Accordingly, the sensing data 121 in the embodiment may be obtained by using the EEG 30 and the load cell 31 to measure the behavior, e.g., the sensory activity and physical activity, of the of worker 50, while the worker 50 executes the work step 40. The performance measurement device 1 can obtain sensing data 121 from the EEG 30 and the load cell 31 via the external interface 13.

The input device 14 may be a mouse, keyboard, or the like for input. The output device 15 may be a display, speaker, or the like for output. An operator uses the input device 14 and the output device 15 to operate the performance measurement device 1. The operator may be, for example the worker 50 themselves, or a supervisor who supervises the worker 15.

The drive 16, may be a compact disk drive (CD), a DVD drive, or the like; the drive 16 is for reading a program stored on a recording medium 90. The type of drive may be selected is appropriate in accordance with the type of recording medium 90.A The above-mentioned performance measurement program 80 may be stored on such a recording medium 90.A

The recording medium 90 may be a medium whereon the information for the program or the like is accumulated via electrical, magnetic, optical, mechanical, or chemical processes so that a computer, another device, or a machine is capable of reading the information recorded in the program or the like. The performance measurement device 1 may obtain the above mention performance measurement program 80 from. The recording medium 90.A

FIG. 4 illustrates a CD, or DVD type recording medium as one example of the recording medium 90. However, this does not mean that the type of recording medium 90 is particularly limited to a disc; the recording medium may be of another format. For instance, a flash memory or a semiconductor memory are examples of this non-disc recording medium.

The constituent elements of the specific hardware configuration of the performance measurement device 1 may be omitted substituted, or added to as appropriate in accordance with the embodiment of the performance measurement device 1. For instance, the controller 11 may contain a plurality of hardware processors. A hardware processor may be configured from a microprocessor, a field-programmable gate array (FPGA), or the like. The storage unit 12 may be configured from the RAM and ROM included in the controller 11. Any one of the external interface 13, input device 14, output device 15, and drive 16 may be omitted. The performance measurement device 1 may include a communication interface that connects to an external device via a network to provide data communication therewith. The EEG 30 and the load cell 31 may be provided with a communication interface; in this case, the performance measurement device 1 may connect to the EEG 30 and the load cell 31 via a network. The performance measurement device 1 may be made up of a plurality of computers. In this case, the hardware configuration of the computers may be identical or may be different. The performance measurement device 1 may be an information processing device designed exclusively for providing a service; beyond this the performance measurement device 1 may be a general purpose server device, a personal computer (PC) or the like.

Software Configuration Next an example of the software configuration for the performance measurement device 1 according to the embodiment is described using FIG. 5. FIG. 5 schematically illustrates an example of a software configuration for the performance measurement device 1 according to an embodiment.

The controller 11 in the performance measurement device 1 expands the performance measurement program 80 stored in the storage unit 12 into RAM. The controller 11 then uses the CPU to compile and execute the performance measurement program 80 expanded to the RAM to control the constituent elements on the basis of a series of commands contained in the performance measurement program 80. Thus, as illustrated in FIG. 5, the performance measurement device 1 operates as a computer provided with the following software modules: a data acquisition unit 111, an index calculating unit 112, a storage processing unit 113, a registration unit 114, a determination unit 115, and an output unit 116. That is, the controller 11 implements the embodiment with the software modules.

The data acquisition unit 111 uses one or a plurality of sensors to measure an activity (behavior) pertaining to at least one of sensory activity and physical activity of the target operator while the target operator executes the task; hereby, the data acquisition unit 111 acquires sensing data 121. As above described, a task is made up of a plurality of basic operations. The index calculating unit 112 analyzes the sensing data 121 acquired to calculate a performance index indicating the level of performance for each of the basic operations achieved through the activity (behavior) of the target operator. The storage processing unit 113 associates the target operator, the task, and the performance index for each of the basic operations and stores these in a predetermined memory area.

The data acquisition unit 111 may also acquire sensing data by using one or a plurality of sensors to measure the activity (behavior) of a skilled operator while the skilled operator executes a task, when the target operator is a skilled operator capable of appropriately executing the task. A skilled operator is an operator capable of repeatedly executing a task in the same manner within a standard time and at a standard quality. That is, during the process of completing a task, the skilled operator is capable of executing a series of basic operations in the correct sequence, in a standard time and at a standard quality; moreover, the skilled operator is capable of completing the task repeatedly in that manner. The index calculation unit 112 analyzes the sensing data acquired from the skilled operator to thereby calculate the performance index of the skilled operator for each of the basic operations. The registration unit 114 registers the performance index of the skilled operator computed for each of the basic operations as the performance index required for each of the basic operations ("required performance index," below).

The determination unit 115 compares a performance index required for each of the basic operations (the required performance index) to suitably accomplish a task and the performance index calculated for the target operator performing the basic operations to determine whether or not the target operator is capable of suitably accomplishing the task. The output unit 116 outputs information pertaining to the result of the determination.

The software modules in the performance measurement device 1 are described in detail below with an operation example. Note that all the software modules of the performance measurement device 1 described with the embodiment are examples that may be implemented with a general purpose CPU. However, all or a portion of the above software modules may also be implemented in one or a plurality of dedicated processors. The software configuration of the performance measurement device 1 may be carried out by omitting, substituting or adding software modules as appropriate in accordance with the form of implementation.

### 3. Operation Example

Next, an operation example of the performance measurement device 1 of the embodiment is described. The performance measurement device 1 according to the embodiment is configured for measuring the performance of a target operator via three modes: a measurement mode, a registration mode, and an operation mode. The measurement mode computes a performance index for a target operator. The registration mode computes the performance index for a skilled operator, and registers the performance index computed for the skilled operator as a required performance index. The operation mode computes the performance index for a target operator and determines whether or not it is possible for the target operator to execute a task on the basis of the performance index computed for the target operator. The processing sequence in each mode described below is one example of the performance measurement method of the invention. However, this does not mean that the performance measurement device 1 must always be configured to execute these three modes. The modes may be omitted or modified as appropriate. The processing sequence described below is merely an example, and the processes may be modified where possible. Moreover, the steps in the processing sequence described below may be omitted, substituted, and steps may be added as appropriate in accordance with the form of implementation.

### Measurement Mode

First, an example of a processing sequence during the measurement mode of a performance measurement device 1 according to the embodiment is described using FIG. 6; FIG. 6 is a flowchart illustrating an example of a processing sequence during the measurement mode of a performance measurement device 1 according to the embodiment.

### Step S101

In step S101, the controller 11 outputs a message directing the target operator to execute a task. The destination and method of outputting the message is not particularly limited and may be selected as appropriate in accordance with the form of implementation.

A task in the embodiment is a work step 40 during a stage on a production line; and a target operator is a worker 50 performing the work step 40. In the embodiment, the controller 11 may output the message via the output device 15 or an output device (not shown) located near the worker 50, for example, to direct the worker 50 to execute the work step 40. The types of work steps 40 directed for execution are not particularly limited and may be selected as appropriate in accordance with the form of implementation. The work step 40 for execution may be soldering, fitting cases, inserting parts for insertion, inspection, packaging, or the like. Once the message is output directing execution of the task, the controller 11 continues to performing the next step S102.

### Step S102

In step S102, the controller 11 operates as the data acquisition unit 111 and uses one or a plurality of sensors to measure an activity relating to at least one of sensory activity and physical activity of the target operator while the target operator executes the task whereby the controller 11 acquires sensing data 121.

In the embodiment, an EEG 30 and a load cell 31 are attached to the worker 50, and the performance measurement device 1 is connected to the EEG 30 and the load cell 31 via the external interface 13. Therefore, the sensing data 121 in the embodiment may be obtained by using the EEG 30 and the load cell 31 to measure the activity relating to the sensory activity and physical activity of the of worker 50, while the worker 50 executes the work step 40 on the production line. That is, the sensing data 121 according to the embodiment is made up of two types of data: a first measurement data containing the amount of brain activity measured by the EEG 30; and a second measurement data containing the load measured by the load cell 31. The sensing data 121 may include the data obtained while the worker 50 performs the work step 40 one time, or may include the data obtained while the worker 50 performs the work step multiple times. In the embodiment, the controller 11 acquires said sensing data 121 from the EEG 30 and the load cell 31 via the external interface 13. The work step 40 contains the above mentioned four types of basic operations. The basic operations of "View", "Hold", "Carry", "Adjust" are defined to include the human cognitive process for at least one cycle; however, the composition and method of acquiring the sensing data 121 are not particularly limited to these examples and may be selected as appropriate for the form of implementation. Once the sensing data 121 is acquired, the controller 11 moves to performing the next step S103.

### Step S103

In step S103 the controller 11 acts as the index calculating unit 112 and analyzes the sensing data 121 acquired to compute a performance index indicating the level of performance of the basic operations achieved through the activity of the target operator. In this embodiment, the controller 11 analyzes the sensing data 121 acquired from the worker 50 to compute a performance index for each of the basic operations included in the work step 40.

The sensing data 121 acquired represents the performance for at least one of the sensory activity and the physical activity in relation to the basic operations contained in a task. Appropriately accomplishing a task means that the basic operations achieved as a result of the sensory activity and the physical activity are executed with high precision. Therefore, performance in relation to the basic operations can be evaluated on the basis of the precision in executing the basic operations.

More specifically, the ability to suitably accomplish a task means the ability to execute the basic operations in the correct order at a suitable speed. Additionally, when the task is attempted repeatedly, the greater the ability of the target operator to accomplish the task, the smaller the variations during an attempt to execute the basic operations; in other words, the target operator is able to execute the basic operations identically at each attempt. Therefore, the precision in executing the basic operations may be represented by the correctness, stability, speed, rhythm, and the like of executing the basic operations.

The correctness is a metric indicating a measure of whether or not the basic operations were executed in the correct sequence when attempting the task once. The stability is a metric indicating a measure of whether or not the basic operations are executed with a uniform procedure for each attempt when the task is attempted a plurality of times. The speed is a metric indicating a measure of the length of time spent on the basic operations and the overlap with a neighboring basic operation when attempting the task once. The rhythm is a metric indicating a measure of whether or not a fixed time is spent on the basic operations during each attempt in the case that the task is attempted a plurality of times. Given these four metrics of correctness, stability, speed, and rhythm, it is possible to appropriately evaluate the performance of a target operator with respect to the basic operations.

In this embodiment, the controller 11 uses these four metrics to analyze the sensing data 121 and compute a performance index for each of the basic operations in step S103. However, these four metrics are examples of the metrics used to evaluate the precision of executing the basic operations. The metrics used to evaluate the precision of executing the basic operations are not limited to these examples and may be determined as appropriate in accordance with the form of implementation.

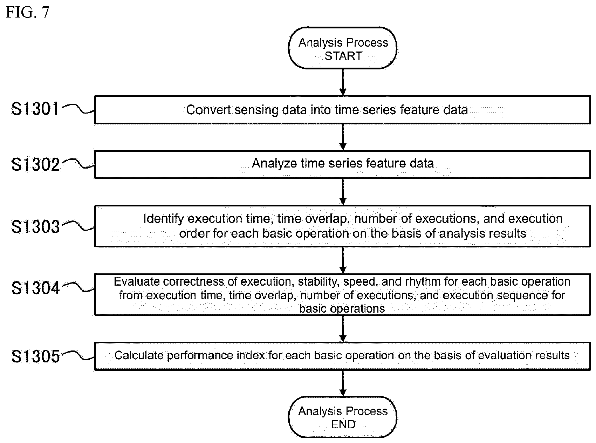

Here, step S103 according to the embodiment is described in detail using FIG. 7. FIG. 7 schematically illustrates an example of a processing sequence that analyzes sensing data 121; the processing in step S103 according to the embodiment includes the processing in the following steps S1301 through S1305.

### Step S1301

In step S1301, the controller 11 converts the sensing data 121 to time series feature data. Any well-known technique maybe adopted for the conversion process as appropriate.

As an example of the conversion process, the controller 11 may first divide sensing data 121 into fixed intervals to partition the sensing data 121 into a plurality of frames. If not needed, the process of partitioning into frames may be omitted. Next, the controller 11 executes a predetermined computation process on a portion of data in each frame to calculate the features within each frame. The controller 11 then plots the features calculated along a time axis. With this series of processes, the controller 11 converts the sensing data 121 into time series feature data. Once the sensing data 121 is converted, the controller 11 moves to performing the next step S1302.

Note that the features may be measurement values of force, motion, point of gaze (gaze direction), or brain waves; for example, the features may be the amplitude, maximum (peak value), minimum, mean, variance, standard deviation, instantaneous value, or the like. The features may be expressed in a probability distribution along a time axis. One or a plurality of features may be adopted as the points used to generate the time series data. That is, the sensing data 121 may be converted into time series data for one or a plurality of features. Additionally, when evaluating different tasks using a common metric (i.e., a basic operation), preferably, a feature is selected that can be commonly monitored between the different tasks. For example, assume that the peak force value is uniquely expressed the basic operations in a first task and a second task. That is, assume that the peak force value that appears within the sensing data can be analyzed during step S1302 (later described). In this case, the peak force value is a feature that is preferably adopted and used to generate the time series data.

Step S1302 and S1303 In step S1302, the controller 11 analyzes the time series feature data to estimate the time segments during which the target operator executes the basic operations along a time axis. Next, the controller identifies the execution time, time overlap, number of executions, and execution order for each basic operation in step S1303 on the basis of the analysis results.

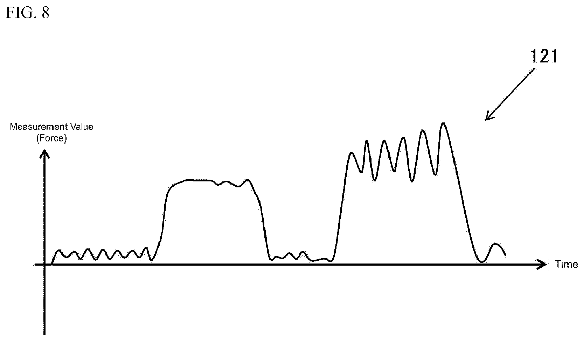

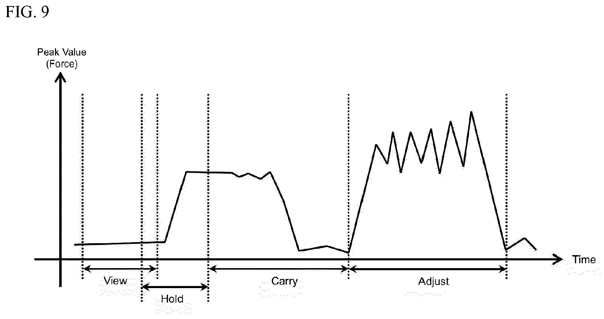

The processes in steps S1301 through S1303 are described in detail using FIG. 8 on FIG. 9. FIG. 8 schematically illustrates an example of the sensing data 121; and FIG. 9 schematically illustrates an example of time series feature data. The sensing data 121 in the embodiment is made up of a first measurement data containing the amount of brain activity measured by the EEG 30 and a second measurement data containing the load measured by the load cell 31. However, in steps S1301 through S1303, the first measurement data and the second measurement data are processed identically. Therefore, for convenience, the description of the first measurement data below is provided assuming that the first measurement data is processed identically to the second measurement data.

As illustrated in FIG. 8, the measurement values for load (force) measured by the load cell 31 are aligned along a time axis in the sensing data 121 according to the embodiment. Adopting the peak force value as a feature, and applying this to the sensing data 121 in the above-mentioned step S1301 results in the time series data illustrated in FIG. 9. Here, the peak force value is lined up along a time axis. Applying the processing of the above step S1302 to the time series data makes it possible to estimate which time in the time series data corresponds to what basic operation. (That is, it is possible to estimate which of the four basic operations in the work step 40 that a worker 50 executing at a given time within the time series data). In other words, it is possible to estimate a correspondence relationship between the time segments in the time series data and the basic operations. Hereby, in step S1303 it is possible to identify execution time, time overlap, number of executions, and execution order of the basic operations within the processes the worker 50 performs to accomplish the work step 40 as illustrated in FIG. 9.

More specifically, the length of a time segment for each of the basic operations and the overlap with a neighboring time segment represents the length of time spent executing the basic operations (the execution time) and the amount of overlap with a neighboring basic operation (time overlap). In the example illustrated in FIG. 9, the execution times for "Carry" and "Adjust" are longer than the execution times for "View" and "Hold". "View" and "Hold" have some time overlap. Additionally, the number of time segments corresponding to each of the basic operations indicates the number of times the basic operations are executed (the number of executions). In the example in FIG. 9, each of the basic operations are executed once. Additionally, the line up (sequence) of time segments corresponding to each of the basic operations indicates the sequence in which the basic operations are executed (the execution order). In the example in FIG. 9, the basic operations: "View", "Hold", "Carry", and "Adjust" are executed in that order. On thus identifying the execution time, the time overlap, the number of executions, and the execution order for the basic operations, the controller 11 continues to processing in the next step S1304.

The techniques for analyzing time series data is not particularly limited as long as it is possible to identify time segments in which the basic operations are executed within the time series data; the analysis technique may be selected is appropriate in accordance with the form of implementation. Any known methods of clustering may be used to analyze the time series data; for example, a state transition efficiency model, Bayes model, Markov model, hidden Markov model, multi-class identification model, kernel function, dynamic time warping, or the like may be adopted.

Additionally, a supervised learning model may be used on the time series data, where the supervised learning model learns to estimate the time segments for the basic operations via machine learning. The machine learning may use a data set made up of a combination of time series feature data taken as a sample and correct data indicating the time segments for a basic operation in the sample. The sample is training data. The learning model may be constituted by a neural network, a support vector machine, or the like. The learning model may be trained using a known learning algorithm such as back propagation or the like, so that the learning model outputs the correct data corresponding to a sample when a sample is entered. Therefore, on receiving time series feature data, a supervised learning model is capable of outputting results estimating the time segments for each of the basic operations in the time series data entered.

Step S1304 In step S1304, the controller 11 evaluates the correctness, stability, speed, and rhythm of executing each of the basic operations on the basis of the execution time, time overlap, number of executions, and execution order identified for each of the basic operations in step S1303.

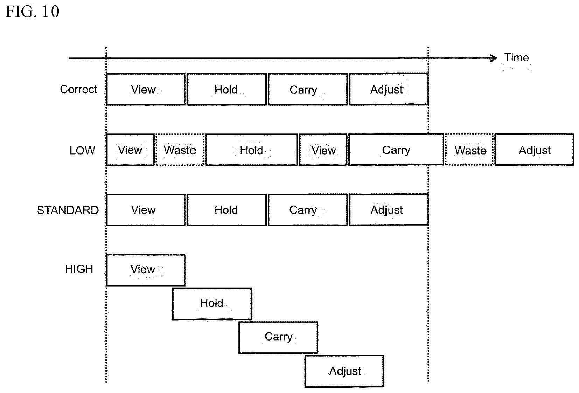

The processes a person uses to master a task are described using FIG. 10. FIG. 10 schematically illustrates an example of a process of a human mastering a task. In the example in FIG. 10, a task contains four basic operations: "View", "Hold", "Carry", and "Adjust". It is assumed that performing these basic operations in this order in a suitable time leads to suitably accomplishing the task ("correct", FIG. 10).

A person who has not mastered the task, i.e., a beginner with a low ability to accomplish the task, cannot execute the basic operations in the correct order and in a suitable time. Therefore, the beginner has a low precision in executing the task and the beginner cannot complete the task in a standard time at a standard quality. Accordingly, as illustrated by the "Low Level" in FIG. 10, the processes executed by a beginner to accomplish the task is such that the time spent for a basic operation is longer than the suitable time; or the time spent on the basic operation is extremely short (i.e., insufficient time is used to execute the basic operation) therefore, the basic operation has to be repeatedly performed; or, there is time not used on any basic operation, or is wasted; or, there is an error in the order in which the basic operations are performed.

As a beginner starts to master a task, the beginner gradually wastes less time in the process of executing the task, and is able to seamlessly perform the basic operations in the correct order within a suitable time. Hereby, the beginner becomes a skilled operator with an ability at a "Standard Level" illustrated in FIG. 10. That is, a skilled operator at a standard level is able to execute the basic operations seamlessly, in the correct order, and within a suitable time; therefore, the skilled operator is able to complete the task within the standard time at a standard quality. When the skills operator at a standard level further masters the task, the skilled operator is able to execute the basic operations even more seamlessly and in a shorter time. Thus, as at the "High Level" illustrated in FIG. 10, there is a time overlap between neighboring basic operations, and less time is spent on each of the basic operations.

The controller 11 evaluates the correctness, stability, speed, and rhythm of execution of each of the basic operations on the basis of the execution time, time overlap, number of executions, and execution order for the basic operations to estimate at which level a target operator belongs, i.e., from low to high. In other words, the more a target operator accomplishes a task repeatedly at the high level, the higher the controller 11 evaluates the correctness, stability, speed, and rhythm of execution of the basic operations by the target operator; and in accordance with this the controller 11 calculates a high performance index for each of the basic operations in step S1305 (later described). In contrast, the more a target operator accomplishes a task repeatedly at the low level, the lower the controller 11 evaluates the correctness, stability, speed, and rhythm of execution of the basic operations by the target operator; and in accordance with this the controller 11 calculates a low performance index for each of the basic operations in step S1305 (later described). The method of evaluation for each of the metrics is described below. As above described, the standard level is treated as the level of a skilled operator, and a skilled operator that has further mastered as task treated as being at a high level. However, the levels established for a skilled operator are not limited to these kinds of examples. For instance, the high level may be treated as the only level for the skilled operator.

### (A) Correctness

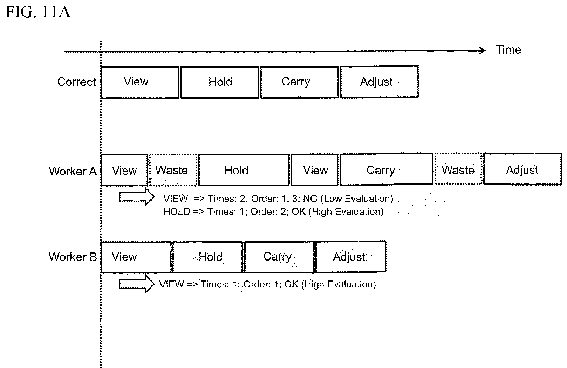

First, the method for evaluating the correctness of executing a basic operation is described with reference to FIG. 11A. FIG. 11A schematically illustrates an example of a method for evaluating the correctness of an execution of a basic operation in the task illustrated in FIG. 10. The correctness is a metric indicating a measure of whether or not the basic operations were executed in the correct sequence. Therefore, the controller 11 evaluates the correctness of executing each of the basic operations on the basis of the number of executions and the execution order of the basic operations identified in step S1303.

For example, in FIG. 11A, a worker A executes the basic operation "View" two times, with each "View" basic operation executed first and third. In contrast, when the basic operations are executed in the correct order, the basic operation "View" is executed first, only once. Therefore, the worker A, makes a mistake in the number of times and the order for executing "View"; thus, the controller 11 evaluates the correctness of executing "View" for the worker A as low. Whereas, worker B executes the basic operation "View" first, and only once. Therefore, the worker B, makes executes the basic operation "View" in the correct order for the correct number of times; thus, the controller 11 evaluates the correctness of executing "View" for the worker B as high.

That is, the further away the number of executions and the execution order of the basic operations executed by the target operator is compared to the number of executions and the execution order of the basic operations when suitably accomplishing the task, the lower the controller 11 evaluates the correctness of execution of the basic operations by the target operator. Whereas, the closer the match in number of executions and the execution order of the basic operations executed by the target operator is compared to the number of executions and the execution order of the basic operations when suitably accomplishing the task, the higher the controller 11 evaluates the correctness of execution of the basic operations by the target operator. In the example in FIG. 11A, while the worker A made errors with respect to the number of executions and the execution order for "View", the worker A has the correct number of executions and correct order for "Hold". Therefore, the controller 11 evaluates a high level of correctness for the execution of "Hold" by worker A.

### (B) Stability

Next, the method for evaluating the stability of executing a basic operation is described. The stability is a metric indicating a measure of whether or not the basic operations are executed with a uniform procedure for each attempt when the task is attempted a plurality of times. Therefore, the controller 11 evaluates the correctness of executing each of the basic operations during an attempt on the basis of the number of executions and the execution order of each of the basic operations. Thereafter the controller 11 evaluates the stability of executing each of the basic operations on the basis of the variations in the correctness during the attempt. The variation may be expressed via known mathematical methods such as variance, and standard deviation.

For example, if the target operator repeatedly executes each of the basic operations the correct number of times and in the correct order as the worker B in FIG. 11A, then the controller 11 evaluates the target operator as executing the basic operations with a high stability. Whereas, the larger the variation in the number of executions and the execution order of the basic operations at each attempt, the lower the controller evaluates the target operator executing the basic operations.

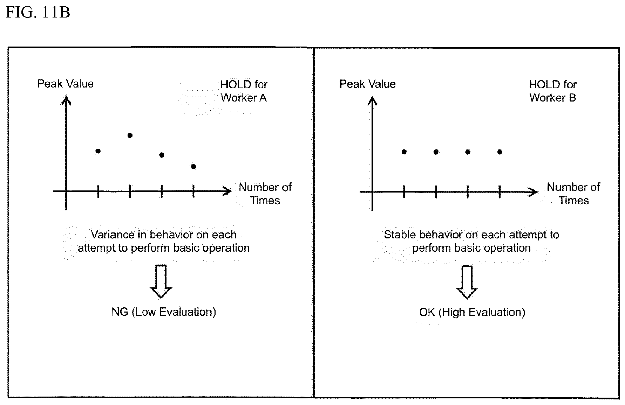

As illustrated in FIG. 11B, the stability of each of the basic operations can be evaluated on the basis of the behavior of the target operator identified from the sensing data 121 or the time series feature data. FIG. 11B schematically illustrates an example of a method for evaluating the stability of an execution of the basic operations; The graph for each of the workers (A, B) in FIG. 11B are examples of the peak force value when the workers attempt to "Hold" as identified from the time series feature data.

As above described, the higher the ability of a target operator to accomplish a task, the more the target operator is capable of executing each of the basic operations in the same manner during an attempt. Accordingly, the larger the variation in the behavior when accomplishing the basic operations, the lower the controller 11 evaluates the stability of execution by the target operator executing the basic operations. In contrast, the smaller the variation in behavior when accomplishing the basic operations, the higher the controller 11 evaluates the stability of execution by the target operator executing the basic operations.

In the example in FIG. 11B, there is some variation in the peak force value when the worker A executes "Hold" during one attempt. Therefore, the controller 11 evaluates a low level of stability for the execution of "Hold" by worker A. In contrast, the peak force value when the worker B executes "Hold" during one attempt is constant. Therefore, the controller 11 evaluates a high level of stability for the execution of "Hold" by worker B.

The number of times a task is attempted in order to evaluate the stability may be established as appropriate in accordance with the form of implementation. The number of attempts may be over a predetermined time, such as over one day, or over one hour, or the like. Given that the task according to the embodiment is also a work step 40 in a stage on a production line, the number of attempts may be established on the basis of the number of individual products that will be produced via the work step 40.

### (C) Speed

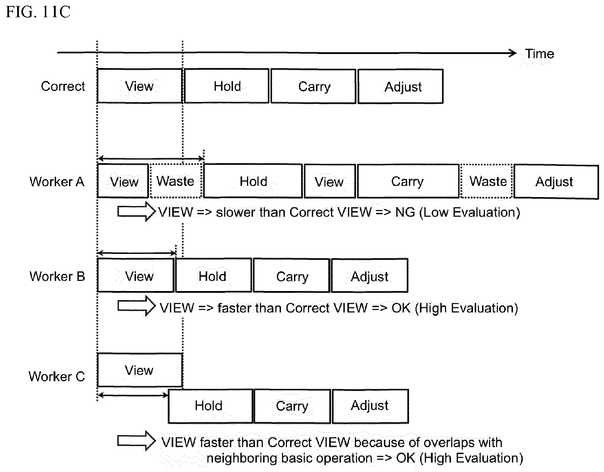

Next, the method for evaluating the speed of executing a basic operation is described with reference to FIG. 11C. FIG. 11C schematically illustrates an example of a method for evaluating the speed of an execution of a basic operation in the task illustrated in FIG. 10. The speed is a metric indicating a measure of the length of time spent on the basic operations and the overlap with a neighboring basic operation. Therefore, the controller 11 evaluates the speed of executing each of the basic operations on the basis of the execution time and the time overlap for the basic operations identified in step S1303.

For instance, given that the worker A performs some wasted movements between "View" and "Hold", this time is added to the basic operation of "View" making the amount of time spent longer than the suitable time. Therefore, the controller 11 evaluates the speed of execution of the "View" by the worker A as slow. Whereas, the amount of time the worker B spends on the basic operation "View" is shorter than the suitable time. Therefore, the controller 11 evaluates the speed of execution of the "View" by the worker B as fast. Similarly, execution of a portion of the "View" and "Hold" operations by the worker C overlap; therefore, the time worker C spends on the basic operation "View" is less than the suitable time. Therefore, the controller 11 evaluates the speed of execution of the "View" by the worker C as fast.

That is, the shorter the time spent on the basic operations compared to the suitable time on the basis of the execution time and the time overlap in the basic operations executed by the target operator, the faster the controller 11 evaluates the speed of execution of the target operator for each of the basic operations. Whereas, the longer the time spent on the basic operations compared to the suitable time, the slower the controller 11 evaluates the speed of execution of the target operator for each of the basic operations.

Basically, the faster the speed of executing the basic operations, the higher the controller 11 evaluates said speed. However, it is possible that the basic operation was insufficiently executed if the speed of executing the basic operations is extremely faster than the suitable speed. Therefore, the controller 11 may determine whether or not the difference between the speed at which the target operator executes the basic operations and the suitable speed of execution exceeds a given threshold, when the speed at which the target operator executes the basic operations is faster than the suitable speed of execution. If the difference in speed does not exceed the threshold, the controller determines to evaluate the speed as high level. On the other hand, if the difference in speed exceeds the threshold, the controller evaluates the speed as low level.

### (D) Rhythm

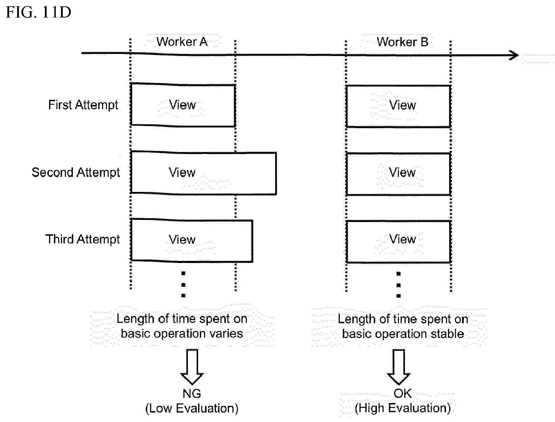

Next, the method for evaluating the rhythm of executing a basic operation is described with reference to FIG. 11D. FIG. 11D schematically illustrates an example of a method for evaluating the rhythm in an execution of a basic operation. The rhythm is a metric indicating a measure of whether or not essentially a fixed time is spent on the basic operations during each attempt in the case that the task is attempted a plurality of times. Therefore, the controller 11 evaluates the speed of executing each of the basic operations during an attempt on the basis of the execution time and the time overlap of each of the basic operations. Thereafter, the controller 11 evaluates the rhythm of executing each of the basic operations on the basis of the variations in the speed during the attempt.

For instance, there are variations in the lengths of time the worker A spends on "View" in FIG. 11D. Therefore, the controller 11 evaluates the rhythm of execution of the "View" by the worker A as bad. On the other hand, the worker B spends a fixed length of time on "View". Therefore, the controller 11 evaluates the rhythm of execution of the "View" by the worker B as good.

In other words, the greater the variation in the speed of execution of the basic operations (i.e., the length of time spent) when the target operator attempts a task a plurality of times, the controller 11 evaluates the target operator as having worse rhythm when executing each of the basic operations. In contrast, the smaller the variation in the speed of execution of the basic operations (i.e., the length of time spent), the controller 11 evaluates the target operator as having a better rhythm when executing each of the basic operations.

As above described, the controller 11 evaluates the correctness, stability, speed, and rhythm of executing each of the basic operations on the basis of the execution time, time overlap, number of executions, and execution order identified for each of the basic operations in step S1303. Once each of the basic operations are evaluated, the controller 11 moves to performing the next step S1305.

Note that the correct order and the suitable time (speed) for each of the basic operations included in a task may be determined as appropriate in accordance with the form of implementation. For example, the correct order and suitable time for each of the basic operations may be presented in advance, or may be established from an operator input. Additionally, the correct order and suitable time for each of the basic operations may be specified on the basis of the behavior of a skilled operator while the skilled operator executes the task. For instance, during a registration mode (later described), the controller 11 may specify the correct order and the suitable time for each of the basic operations from the sensing data 121 acquired from a skilled operator.

Step S1305 In step S1305, the controller calculates a performance index for each of the basic operations in accordance with the results of the evaluation in step S1304. The greater the degree of correctness, the greater the stability, the faster the speed, and the better the rhythm of executing a basic operation (i.e., each basic operation has a high evaluation), the higher the value the controller 11 calculates for the performance index for the basic operation. In contrast, the lower the degree of correctness, the lower the degree of stability, the slower the speed, and the worse the rhythm of executing a basic operation (i.e., each basic operation has low evaluations), the lower the value the controller 11 calculates for the performance index for the basic operation.

For example, exemplary behavior for accomplishing each of the basic operations in the correct order and within a suitable time is given a performance index that is a standard value (e.g., the behavior labels "Correct", FIG. 10). This standard value may be applied in advance, or may be established based on input from an operator or the like. The controller 11 compares the degree of evaluations for the target operator executing each of the basic operations with the preliminary applied exemplary behavior; further, the controller 11 may calculate a performance index for each of the basic operations from the standard value in accordance with the comparison. That is, the higher the evaluation for each of the basic operations executed by the target operator compared to the exemplary behavior, the same or the higher the controller 11 computes calculates a performance index for each of the basic operations. Whereas, the lower the evaluation for each of the basic operations executed by the target operator compared to the exemplary behavior, the lower the controller 11 calculates a performance index for each of the basic operations. A computational model such as a linear regression model, covariance structure analysis, or multiple regression analysis in calculating the performance indexes. The performance index may be computed on the basis of comparison with a threshold obtained by normalizing all the data. The exemplary behavior may be applied via input from an operator or the like, or applied from the actions of a skilled operator.

Note that when using a common metric (basic operation) between different tasks to compare the ability of a target operator to accomplish tasks, the standard value for each of the performance indexes is preferably established in accordance with the difficulty of the sensory activity and the physical activity required for each of the basic operations.

For example assume the existence of two tasks: task X and task Y. Also assume that the sensory activity and the physical activity required for "View" in the task X is to touch the object with the finger to recognize the state (one-dimensional information) of an object on the basis of the sensation transferred from the object, as if performing an external inspection of a product or the like. In contrast, the sensory activity and the physical activity required for "View" in the task Y is to touch an object to be connect to another object with the finger, and to recognize the state (two-dimensional information) of the object from the sensation transferred to the finger from the object as if performing an examination of the object by touch.

In this case, clearly there is a greater difficulty in the sensory activity and the physical activity required to "View" in the task Y than the difficulty in the sensory activity and the physical activity required to "View" in the task X. At this point, the performance index calculated for "View" when the task X is accomplished cannot be simply compared to the performance index calculated for "View" when the task Y is accomplished if to "View" in the task X and to "View" in the task Y are each given the same reference value standard value. In other words, a target operator capable of executing "View" in task X with a high performance index is not necessarily capable of executing "View" in task Y with the same high performance index.

Therefore, when using a common metric (basic operation) between different tasks to compare the ability of a target operator to accomplish tasks as above described, the standard value for each of the performance indexes is preferably established in accordance with the difficulty of the sensory activity and the physical activity required for each of the basic operations included in each of the tasks. For example, a determination rule may be established for determining the difficulty of the sensory activity and the physical activity, and the standard value preferably determined for a performance index for each of the basic operations established for the tasks on the basis of the established determination rule.

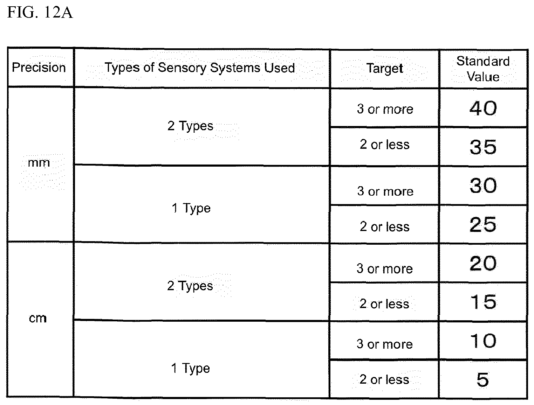

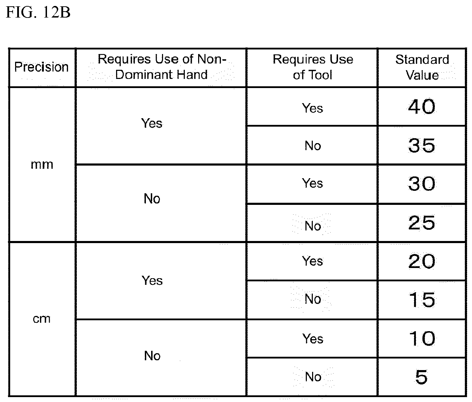

Here, examples of determination rules are described using FIG. 12A and FIG. 12B. FIG. 12A illustrates an example of the relationship between the difficulty of sensory activity and a standard value for a performance index; and FIG. 12B illustrates an example of the relationship between the difficulty of a physical activity and a standard value for a performance index.

In the example of the determination rule in FIG. 12A, the difficulty of the sensory activity is evaluated on the basis of three parameters: the precision of the senses, the types of sensory systems used, and the number of sensory objects. That is, the higher the precision of the senses, the greater the types of sensory systems used, and the greater the number of sensory objects required, the higher the difficulty of the sensory activity. Therefore, in the determination rule depicted in FIG. 12A when a basic operation requires the precision in millimeters (mm), use of two types of sensory systems, and three or more sensory objects, the standard value for the performance index is established as the highest value of "40". In contrast, in the determination rule depicted in FIG. 12A, when a basic operation requires the precision in centimeters (cm), use of one type of sensory system, and no more than two sensory objects, the standard value for the performance index is established as the lowest value of "5 ". In the determination rule depicted in FIG. 12A, the difficulty of the sensory activity can be evaluated at eight levels on the basis of the above three parameters, with the standard value established at equal intervals in accordance with the levels of difficulty.

In the determination rule depicted in FIG. 12B, the difficulty of the physical activity is evaluated on the basis of three parameters: the precision of the physical movement, whether or not the non-dominant hand is used, and whether or not a tool is used. That is, the higher the precision of the physical movement, the use of the non-dominant hand, and the use of the tool required the higher the difficulty of the physical activity. Therefore, in the determination rule depicted in FIG. 12B, a basic operation requiring the precision of physical movement in millimeters (mm), the use of the non-dominant hand, and the use of the tool is given the highest value "40" as the standard value for the performance index. In contrast, in the determination rule depicted in FIG. 12B, a basic operation requiring the precision of physical movement in centimeters (cm), no use of the non-dominant hand, and no use of the tool is given the lowest value "5" as the standard value for the performance index. Similar to the determination rule depicted in FIG. 12A, in the determination rule in FIG. 12B, the difficulty of the physical activity can be evaluated at eight levels on the basis of the above three parameters, with the standard value established at equal intervals in accordance with the levels of difficulty.

The controller 11 uses the determination rules in FIG. 12A and FIG. 12B to thereby determine a standard value for a performance index established for each of the basic operations within each of the tasks in accordance with the difficulty for each of the basic operations. For example, when both determination rules are used, the controller 11 may evaluate the difficulty for each of the sensory activity and the physical activity on the basis of each determination rule, and total the standard value derived from each of the determination rules to thereby establish a standard value for the performance index for each of the basic operations in accordance with the difficulty of each of the basic operations. The controller 11 uses the standard value established for the each of the basic operations included in each of the tasks to calculate performance indexes for each of the basic operations in accordance with the results of the evaluation from step S1304. It is thus possible to compare the ability for a target operator to accomplish each of the tasks using a common metric (a basic operation) between different tasks.

However, the parameters for evaluating the difficulty of the sensory activity and the physical activity is not limited to these examples and maybe established as appropriate in accordance with the form of implementation. The parameters other than those given above may be used for evaluating the difficulty of sensory activity, and may be, for example, the recognition object (one-dimensional information or two-dimensional information), the recognition location (e.g., recognizing the external state or the internal state of the object), or the like. In contrast, the parameters other than those given above may be used for evaluating the difficulty of physical activity such as the number of body parts that are moved, the movement time, or the like. Additionally, the correspondence relationship between the difficulty of the sensory activity and the physical activity and the standard value for the performance index is not limited to the examples given in FIG. 12A on FIG. 12B; the correspondence relationship may be established as appropriate in accordance with the evaluation parameters.

The controller 11 uses this series of processes in the above step S1301 through S1305 to analyze the sensing data 121 to thereby calculate a performance index for each of the basic operations. In this embodiment, the controller 11 analyzes the sensing data 121 acquired from the worker 50 to compute a performance index for each of the basic operations included in the work step 40. Once the performance index is computed for each of the basic operations, the controller 11 continues to performing the next step S104.

The series of computational processes in steps S1301 through S1305 maybe modeled. That is, using a model a computational model, the controller 11 may directly derive a performance index for each of the basic operations from the sensing data 121. A supervised learning model may serve as this computational model, where the supervised learning model trains on the ability to derive a performance index for each of the basic operations from the sensing data 121 through machine learning. The machine learning may use a data set made up of a combination of sample sensing data (training data) and correct data representing the performance index derived from the sample for each of the basic operations. The learning model may be constituted by a neural network, a support vector machine, or the like. The learning model may be trained using a known learning algorithm such as back propagation or the like, so that the learning model outputs the correct data corresponding to a sample when a sample is entered. Hereby, on receiving the sensing data 121, the supervised learning model is capable of outputting a performance index for each of the basic operations as derived from the sensing data 121 that is entered.

Step S104 Returning to FIG. 6, in step S 104, the controller 11 acts as the storage processing unit 113 and associates the target operator, the task, and the performance index for each of the basic operations and stores these in a predetermined storage area. The controller 11 in the embodiment associates the worker 50, the work step 40, and the performance index computed for each of the basic operations and stores these in a predetermined storage area.

The predetermined storage area on the format of the data is not particularly limited and may be selected as appropriate in accordance with the form of implementation. The predetermined storage area may be the internal RAM of the controller 11, the storage unit 12, an external storage device, storage media, or a combination of these. The storage medium may be, for example a CD or a DVD or the like, and the controller 11 may store data to the storage media via the drive 16. The external storage device, may be for instance, an externally installed storage device connected via the external interface 13. In this case, the controller 11 may store data on the externally installed storage device via the external interface 13. If the performance measurement device 1 can be connected to a network, the external storage device may be a data server such as a network attached storage (NAS). In this case, the controller 11 may store data to the data server via the network. In this embodiment, the storage unit 12 maintains the proficiency database 70. The controller 11 thus associates and stores the worker 50, the work step 40, and a performance index calculated for each basic operation in the proficiency database 70 on the storage unit 12.

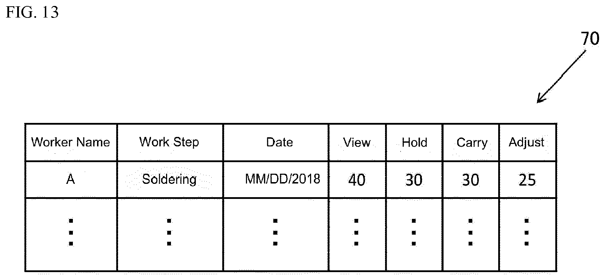

An example of the proficiency database 70 is described with using FIG. 13. FIG. 13 schematically illustrates an example of a proficiency database 70 according to the embodiment. The proficiency database 70 stores the performance index for each target operator. In the example in FIG. 13 the proficiency database 70 is expressed in table form where each record (row data) includes the fields: Worker Name, Work Step, Date, View, Hold, Carry, Adjust. The worker name field stores information for identifying the worker 50. The work step field stores information for identifying the worker 40. The date field stores information representing the date the performance index was measured. The View, Hold, Carry, and Adjust fields store the performance index for each of computed for each of these basic operations... However, the data format and the fields in the proficiency database 70 is not limited to this type of example and may be selected is appropriate in accordance with the form of implementation.

In step S104, the controller 11 creates a record in the proficiency database 70. The controller 11 stores information identifying the worker 50, information identifying the work step 40, information representing the date, and the performance indexes calculated in step S103 for each of the basic operations in fields of the record created. The controller 11 thus associates and stores the worker 50, the work step 40, and a performance index calculated for each basic operation in the proficiency database 70.

Herewith, the controller 11 completes a series of processes in the measurement mode according to the embodiment. The controller 11 may execute the above-mentioned series of processes in steps S101 through S104 according to an instruction via input from an operator or the like to measure the performance index for the worker 50. The timing for executing the measurement mode in this operational example may be selected as appropriate in accordance with the form of implementation. The controller 11 may also repeat the series of processes in steps S101 through S104 to periodically or non-periodically measure the performance index of a target operator (a worker 50) for each of the basic operations in a task (work step 40). The processing sequence in the measurement mode according to the above operational example may be modified where possible. For example, the controller 11 may omit the processing in step S101 and execute the processing in steps S102 through S104.

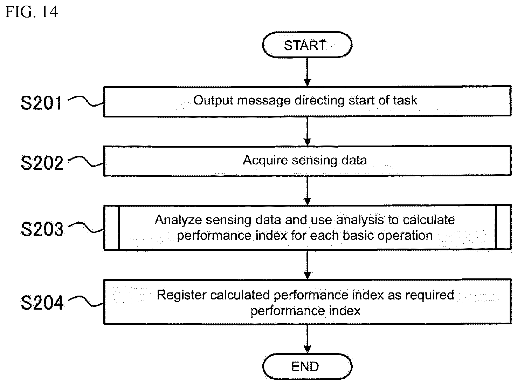

Registration Mode Next, an example of a processing sequence during the registration mode of a performance measurement device 1 according to the embodiment is described using FIG. 14; FIG. 14 is a flowchart illustrating an example of a processing sequence during the registration mode of a performance measurement device 1 according to the embodiment.

Step S201 through S203 Except for where the worker 50 is a skilled operator, steps S201 through S203 are identical to the above steps S101 through S103. That is, in step S201, the controller 11 outputs a message directing the skilled operator to execute a task. In step S202, the controller 11 operates as the data acquisition unit 111 and uses one or a plurality of sensors to measure an activity (behavior) relating to at least one of sensory activity and physical activity of the skilled operator while the skilled operator executes the task whereby the controller 11 acquires the sensing data 121. In step S203, the controller 11 operates as the index calculation unit and analyzes the sensing data 121 acquired from the skilled operator to thereby calculate the performance index of the skilled operator for each of the basic operations. Once the performance index is computed for the skilled operator, the controller 11 continues to performing the next step S204.

The controller 11 identifies the execution time, the time overlap, the number of executions, and the execution order for each of the basic operations during the process of deriving the performance index for each of the basic operations from the sensing data 121 of a skilled operator in step S203. The controller 11 may also establish the correct order and the suitable time (i.e., the exemplary behavior) for each of the above basic operations on the basis of the execution time, the time overlap, the number of executions, and the execution order for each of the basic operations during the process of the skilled operator accomplishing the task. In this case, the controller 11 may terminate the processing sequence in the registration mode according to this operational example without calculating the skilled operator.

If the correct order and a suitable time is already established for each of the basic operations, the controller 11 may revise or update the correct order and the suitable time for each of the basic operations on the basis of the execution time, the time overlap, the number of executions, and the execution order for each of the basic operations by the skilled operator. In this case, the controller 11 may also evaluate the correctness, stability, speed, and rhythm of execution of each of the basic operations by the skilled operator on the basis of the correct order and the suitable time already established for each of the basic operations. The controller 11 may continue to calculate the performance index for the skilled operator with respect to each of the basic operations on the basis of the results of this evaluation. The controller 11 may also revise or update the standard value for the performance index for each of the basic operations from the performance index calculated for the skilled operator with respect to each of the basic operations.

Step S204 In step S204, the controller 11 operates as the registration unit 114 and registers the performance index computed for the skilled operator for each of the basic operations in step S203 as the required performance index for each of the basic operations.

As an example of the registration process, the controller 11 may store the performance index calculated for the skilled operator for each of the basic operations in step S203 as the required performance index for each of the basic operations in a usable form in a predetermined storage area. The predetermined storage area may be RAM, the storage unit 12, an external storage device, storage media, or a combination of these. The controller 11 may store the performance index computed for the skilled operator with respect to each of the basic operations as the required performance index in a usable format in the proficiency database 70. However, the particulars of the registration process are not limited to this example and may be determined as appropriate in accordance with the form of implementation.

Herewith, the controller 11 completes a series of processes in the registration mode according to the embodiment. The controller 11 may execute the above-mentioned series of processes in steps S201 through S204 according to an instruction via input from an operator or the like to perform measurement during the registration mode. The controller 11 may execute the above-mentioned series of processes in steps S201 through S204 according to an instruction indicating the worker 50 is a skilled operator. The timing for executing the registration mode in this operational example may be selected as appropriate in accordance with the form of implementation. The processing sequence for the registration mode according to the above operational example may be modified where possible. For example, the controller 11 may omit the processing in step S201 and execute the processing in steps S202 through S204.

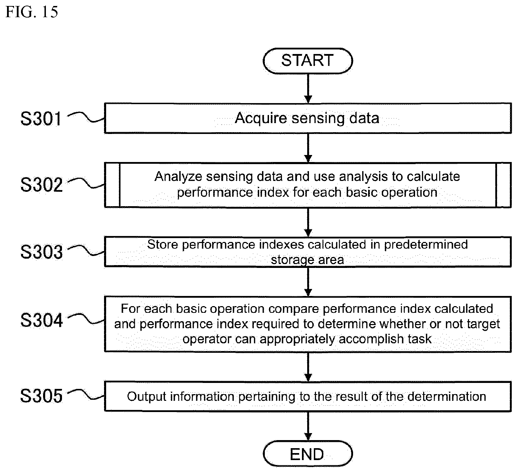

Operation Mode Next, an example of a processing sequence during the operation mode of a performance measurement device 1 according to the embodiment is described using FIG. 15; FIG. 15 is a flowchart illustrating an example of a processing sequence during the operation mode of a performance measurement device 1 according to the embodiment.

Step S301 through S303 The steps S301 through S303 are identical to the above-mentioned steps S102 through S104. That is, in step S301, the controller 11 operates as the data acquisition unit 111 and uses one or a plurality of sensors to measure an activity relating to at least one of sensory activity and physical activity of the target operator while the target operator executes the task whereby the controller 11 acquires sensing data 121. In step S302, the controller 11 acts as the index calculating unit 112 and analyzes the sensing data 121 acquired to calculate a performance index indicating the level of performance of the basic operations achieved through the activity of the target operator. In step S303, the controller 11 acts as the storage processing unit 113 and associates the target operator, the task, and the performance index computed in step S103 for each of the basic operations and stores these in a predetermined storage area. In the embodiment the performance index is computed for the worker 50 with respect to each of the basic operations included a work step 40, and the performance index computed for the worker 50 with respect to each of the basic operations is stored in a predetermined storage area. Once a performance index is stored in the predetermined storage area for each of the basic operations, the controller 11 continues to performing the next step S304.

Step S304 In step S304, the controller 11 operates as the determination unit 115, and compares the performance index of the target operator computed for each of the basic operations with the required performance index to thereby determine whether or not the target operator is capable of accomplishing the task.

In the embodiment the controller 11 compares the performance index computed for a worker 50 with the required performance index for each of the basic operations included in a work step 40. For instance, the controller 11 may determine whether or not the performance index computed for a worker 50 with respect to each of the basic operations is greater than or equal to the required performance index for each of the basic operations. The controller 11 then determines that the worker 50 is able to suitably accomplish the work step 40 when the performance index of the worker 50 for all the basic operations is greater than or equal to required performance index. Whereas, the controller 11 determines that the worker 50 is unable to suitably accomplish the work step 40 when the performance index of the worker 50 for any of the basic operations is less than the required performance index. At this point, the controller 11 may output the basic operation where the performance index of the worker 50 is less than the required performance index as a basic operation that the worker 50 is unable to suitably accomplish. However, the particulars of the determination process are not limited to this example and may be determined as appropriate in accordance with the form of implementation.

Once the determination of whether or not a target operator is able to suitably accomplish a task is complete, the controller 11 may continue to performing the next step S305. The required performance index used in the determination process may be preliminarily presented, or may be established based on input from an operator or the like. Alternatively, the required performance index used in the determination process may be the performance index for a skilled operator that was registered during the above registration mode. The performance index registered during the registration mode for the skilled operator may be used as the required performance index whereby it is possible to reliably determine whether or not a worker 50 is able to suitably accomplish the work step 40.

### Step S305

In step S305 the controller 11 operates as an output unit 116 to output information pertaining to the results of the determination in step S304. However, the particulars of the output process are not limited to this example and may be determined as appropriate in accordance with the form of implementation.

For instance, the controller 11 may output the results of the determination from step S304 as is to the output device 15. The controller 11 thus transfers the results of the determination on whether or not a worker 50 is able to suitably accomplish a work step 40 to the worker 50 themselves or to a supervisor of the worker 50. If it is determined that the worker 50 is unable to suitably accomplish the work step 40, the controller 11 may acquire the basic operation that the worker 50 is unable to suitably accomplish, and output the basic operation acquired together with the above determination result to the output device 15. The controller 11 may also output a message to the output device 15 prompting the worker 50 to practice the basic operation that the worker 50 is unable to suitably accomplish. Additionally, the controller 11 may output a message to the output device prompting a change in the work step the worker 50 is responsible for if the worker 50 continues to be unable to suitably accomplish the work step 40. Note that the destination to which information is output is not limited to the output device 15, and may be an output device such as a user terminal carried by the worker 50 or the supervisor, a display located near the worker 50, an indicator light, or the like.

The performance measurement device 1 may be connected to a control device (not shown) configured to control the operations of a cooperating device in cases where, for instance, the worker 50 works with a cooperating device (not shown) such as a robot device, or a conveyor device in accomplishing the work step 40. In this case the controller 11 may output information pertaining to the determination result as a control signal to the control device to request an intervention in the operation of the cooperating device. More specifically, the controller 11 may determine the particulars for operating the cooperating device in order to improve or maintain the performance index of the worker 50, and output a control signal to the control device that directs the cooperating device to operate in accordance with the particulars determined.

As an example, when it is determined that the worker 50 is unable to suitably accomplish the work step 40, the controller 11 may determine to cause the cooperating device to execute operations that may support the basic operation that the worker 50 is unable to suitably accomplish. The controller may output a control signal to the control device requesting for the cooperating device to operate in that manner. An operation to support execution of a basic operation may be selected as appropriate in accordance with the form of implementation. For instance, a robot device may be caused to support the "Hold" operation, or the conveyor device may be operated to change the speed in order to facilitate the worker 50 during the basic operation, "View".

Herewith, the controller 11 completes a series of processes in the operation mode according to the embodiment. The controller 11 may execute the above-mentioned series of processes in steps S301 through S305 according to an instruction via input from an operator or the like to determine whether or not the worker 50 is able to suitably accomplish the work step 40. The timing for executing the operation mode in this operational example may be selected as appropriate in accordance with the form of implementation. The controller 11 may also repeat the series of processes in steps S301 through S305 to periodically or non-periodically to monitor the worker 50 accomplishing the work step 40. The processing sequence in the operation mode according to the above operational example may be modified where possible.

### Features

As above described, a performance measurement device 1 according to the embodiment performs the steps S101 through S 103 to thereby compute the performance index of a worker 50 for each of the basic operations included in a work step 40. Given that each of the performance indexes correspond to the degree of ability to accomplish each of the basic operations, the performance indexes computed can objectively and quantitatively indicate the ability of a worker 50 with respect to each of the basic operations. Accordingly, performance indexes obtained for the basic operations included in a work step 40 can objectively and quantitatively indicate the ability, which is how a worker 50 performs that work step 40. Therefore, the performance measurement device 1 according to the embodiment can objectively and quantitatively measure the ability of a worker 50 performing a work step 40. Thus, it is possible to objectively indicate where to caution the worker 50 or what kind of movements must be performed in order to accomplish a work step 40 appropriately.

The performance measurement device 1 according to the embodiment may also determine through the above steps S304 and S305 whether or not a target operator is able to suitably accomplish task and outputs information pertaining to the results of the determination. Hereby, the worker 50 themselves or the supervisor may be notified of the basic operation that the worker 50 is unable to suitably accomplish, allowing a cooperating device to support execution of the basic operation. Accordingly, the embodiment is capable of systematically improving or maintaining the productivity and efficiency of a production line on the production floor.

### 4. Modification Examples

While an embodiment of the present invention is described above in detail, all points in the previous description are merely examples of the present invention. It goes without saying that various modifications and variations are possible without departing from the scope of the invention. For instance, the following modification is possible. Note that constituent elements that are identical to the constituent elements in the above described embodiment are given the same reference numerals and where appropriate, a description of features that are identical to the above embodiment are omitted. The following modifications may be combined as appropriate.

4.1 In the above embodiment, the present invention was adopted in an example to measure the performance of a worker 50 performing a work step 40 during a stage on a production line. However, the scope to which the invention may be applied is not limited to this kind of setting and the invention may be applied to any setting where a human executes some kind of task. For example, the present invention may be applied to a setting where a driver operates a vehicle.

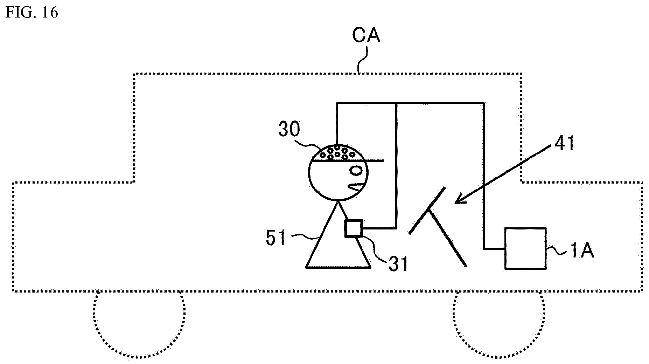

FIG. 16 schematically illustrates an example of where a performance measurement device 1A according to the embodiment may be adopted. Note that the hardware configuration of the performance measurement device 1A is the same as a hardware configuration of the performance measurement device 1 according to the above embodiment. The target operator is a driver 51 driving a vehicle CA; and except for the task 41 being the driving operation of the vehicle CA, the performance measurement device 1A operates similarly to the performance measurement device 1 according to the above embodiment. That is, the performance measurement device 1A uses one or a plurality of sensors to measure the activity (behavior) of the driver 51 while the driver 51 is driving the vehicle CAto acquire the sensing data during step S102 of the measurement mode. In step S103, the performance measurement device 1A analyzes the sensing data acquired from the driver 51 to calculate a performance index for each of the basic operations. All other modes are the same. The performance measurement device 1A according to the embodiment can thus objectively and quantitatively measure the ability of a driver 51 performing driving operation. It is therefore possible to systematically improve or maintain the quality of the driving operation performed by a driver 51 operating the vehicle CA.

4.2 In the above embodiments an EEG 30 and a load cell 31 are used for measuring the sensory activity on the physical activity of the worker 50. However, the number of sensors used for measuring at least one of the sensory activity on the physical activity is not limited to two; there may be one sensor or three or more sensors.

The sensor is also not limited to an EEG 30 and a load cell 31. As long as the sensor is capable of measuring a physiological parameter relating to at least one of the sensory activity and the physical activity of the target operator, the type of sensor is not particularly limited and may be selected as appropriate in accordance with the form of implementation. The behavior of the sensory systems may be expressed for instance through brain waves, cerebral blood flow, pupil diameter, gaze direction, facial expression, voice, electrocardiogram, blood pressure, electromyograph, a galvanic skin reflex, or the like. Therefore, the one or plurality of sensors for measuring sensory activity may be one or a combination of, for example: an electroencephalographic meter; a magnetoencephalographic meter; a magnetic resonance imaging device configured to use functional magnetic resonance imaging to take images of the blood flow in relation to brain activity; a brain activity measurement device configured to use functional near infrared spectroscopy to measure cerebral blood flow; a gaze sensor configured to measure pupil diameter and gaze direction; an electrooculographic sensor; a microphone; an electrocardiographic meter, a blood pressure meter; an electromyographic sensor; a galvanic skin reflex meter; and a camera. In contrast, the behaviors and physical activities may be expressed with the musculoskeletal system, such as the finger, hand, leg, neck, waist, joints, or muscles. Therefore, the one or plurality of sensors for measuring physical activity may be for instance a camera, motion capture device, load cell or a combination of these. The one or plurality of sensors is made up one or a combination of a camera, a microphone, an electroencephalography meter, a magnetoencephalographic meter, a magnetic resonance imaging device, an electrocardiography meter, a blood pressure meter, a galvanic skin reflex meter, an electromyographic sensor, a load cell, a motion capture device, a brain activity measurement device, a gaze sensor, and an electrooculographic sensor.

The sensing data 121 according to the above embodiment is made up of a first measurement data containing the amount of brain activity measured by the EEG 30; and a second measurement data containing the load measured by the load cell 31. However, the composition of the sensing data 121 is not limited to this kind of example; the sensing data may be determined as appropriate in accordance with the type of sensor used to measure activities related to at least one of the sensory activity and physical activity of the target operator.

In the above-mentioned embodiment, the performance measurement device 1 was also connected to an EEG 30 and a load cell 31 via the external interface 13; however the performance measurement device may acquire sensing data 121 directly from the EEG 30 and the load cell 31. However, the method of acquiring the sensing data 121 is not particularly limited to this example and may be selected as appropriate in accordance with the form of implementation. For example the one or plurality of sensors may be connected to an information processing device other than the performance measurement device 1. In this case, the performance measurement device 1 (the controller 11) may acquire the sensing data 121 indirectly from the other information processing device via the network or a recording medium, or the like.

4.3 The basic operations of "View", "Hold", "Carry", "Adjust" in the above embodiment are defined to include the human cognitive process for at least one cycle. However, the definition of each of the basic operations is not limited to this example and may be determined as appropriate in accordance with the form of implementation as long as it is possible to identify the basic operations within a task. Additionally, the type of basic operations is not limited to the above four types of basic operations; any of the basic operations may be omitted, any of the basic operations may be substituted replaced, and different types of basic operations added as appropriate in accordance with the form of implementation.

4.4 The performance measurement device 1 according to the above embodiment uses for metrics: correctness, stability, speed, and rhythm for evaluating the precision of executing each of the basic operations. However, the processing in step S103 is not limited to this example and may be determined as appropriate in accordance with the form of implementation. For example, the controller 11 may evaluate any one of the correctness, stability, speed, and rhythm of executing each of the basic operations in the above step S1304; and in the above step S1305, the controller may calculate performance index for each of the basic operations in accordance with the results of said evaluation.

## Claims

1. A performance measurement device (1) comprising: a data acquisition unit (111) configured to acquire sensing data (121) obtained from one or a plurality of sensors (30; 31) configured to measure an activity relating to at least one of sensory activity and physical activity of a target operator (50; 51) while said target operator (50; 51) executes a task (40), said task (40) including a plurality of basic operations;
an index calculating unit (112) configured to analyze the sensing data (121) acquired to thereby calculate a performance index from the sensing data (121), the performance index indicating a degree of performance for the basic operations achieved through said activity; and
a storage processor (113) configured to store the target operator (50; 51), the task (40), and the performance index calculated for each of the basic operations in association in a predetermined storage area (70).

2. The performance measurement device (1) according to claim 1, further comprising: a determination unit (115) configured to compare a performance index required for a basic operation to suitably accomplish the task (40) and the performance index calculated for the target operator (50; 51) performing the basic operation to determine whether or not the target operator (50; 51) is able of suitably accomplish the task; and
an output unit (116) configured to output information related to the result of the determination.

3. The performance measurement device (1) according to claim 2, further comprising: a registration unit (114); wherein: the data acquisition unit (111) uses one or a plurality of sensors (30; 31) to measure the activity of a skilled operator able to suitably accomplish the task (40) while the skilled operator executes the task (40) to thereby acquire sensing data (121); and
the index calculation unit (112) analyses the sensing data (121) acquired from the skilled operator to thereby calculate a performance index of the skilled operator for each of the basic operations; and
the registration unit (114) configured to register the performance index of the skilled operator calculated for each of the basic operations as the performance index required for each of the basic operations.

4. The performance measurement device (1) according to any one of claims 1 through 3, wherein: the each of the basic operations is defined to include a human cognitive process for at least one cycle; and
the data acquisition unit (111) acquires sensing data (121) obtained by using a plurality of sensors (30; 31) to measure an activity relating to the sensory activity and the physical activity of the target operator (50; 51).

5. The performance measurement device (1) according to any one of claims 1 through 4, wherein: analyzing the sensing data (121) includes evaluating at least any one of the correctness, stability, speed, and rhythm of executing the basic operations; and
the index calculating unit (112) calculates the performance index for each of the basic operations in accordance with the result of the evaluation.

6. The performance measurement device (1) according to any one of claims 1 through 4, wherein: analyzing the sensing data (121) includes:
converting the sensing data (121) into time series feature data;
analyzing the time series feature data to thereby identify the execution time, time overlap, number of executions, and execution order of the basic operations; and
evaluating the correctness, stability, speed, and rhythm of execution for each of the basic operations on the basis of the execution time, time overlap, number of executions, and execution order for the basic operations; and
the index calculating unit (112) calculates the performance index for each of the basic operations in accordance with the result of the evaluation.

7. The performance measurement device (1) according to any one of claims 1 through 6, wherein: the one or plurality of sensors (30; 31) is made up one or a combination of a camera, a microphone, an electroencephalographic meter, a magnetoencephalographic meter, a magnetic resonance imaging device, an electrocardiographic meter, a blood pressure meter, a galvanic skin reflex meter, an electromyographic sensor, a load cell, motion capture, a brain activity measurement device, a gaze sensor, and an electrooculographic sensor.

8. The performance measurement device (1) according to any one of claims 1 through 7, wherein: the target operator (50; 51) is a worker (50) on a production line;
the task (40) is a work step (40) within a stage on a production line;
the data acquisition unit (111) uses the one or the plurality of sensors (30; 31) to measure the activity of the worker (50) while the worker (50) is executing the work step (40) on the production line to thereby acquire sensing data (121); and
the index calculating unit (112) analyzes the sensing data (121) acquired from the worker (40) to calculate a performance index for each of the basic operations.

9. The performance measurement device (1) according to any one of claims 1 through 7, wherein the target operator (50; 51) is a driver (51) operating a vehicle (CA);
the task (40) involves driving the vehicle (CA);
the data acquisition unit (111) uses the one or the plurality of sensors (30; 31) to measure the activity of the driver (51) while the driver (51) is driving the vehicle (CA) to thereby acquire sensing data (121); and
the index calculating unit (112) analyzes the sensing data (121) acquired from the driver (51) to calculate a performance index for each of the basic operations.

10. A performance measurement method causing a computer to execute steps comprising:
acquiring sensing data (121) obtained from one or a plurality of sensors (30; 31) configured to measure an activity relating to at least one of sensory activity and physical activity of a target operator (50; 51) while said target operator (50; 51) performs a task (40), said task (40) including a plurality of basic operations;
analyzing the sensing data (121) acquired to thereby calculate a performance index from the sensing data (121), the performance index indicating a degree of performance for the basic operations achieved through said activity; and
storing the target operator (50; 51), the task (40), and the performance index calculated for each of the basic operations in association in a predetermined storage area (70).

11. A performance measurement program (80) causing a computer to execute steps comprising:
acquiring sensing data (121) obtained from one or a plurality of sensors (30; 31) configured to measure an activity relating to at least one of sensory activity and physical activity of a target operator (50; 51) while said target operator (50; 51) performs a task (40), said task (50; 51) including a plurality of basic operations;
analyzing the sensing data (121) acquired to thereby calculate a performance index from the sensing data (121), the performance index indicating a degree of performance for the basic operations achieved through said activity; and
storing the target operator (50; 51), the task (40), and the performance index calculated for each of the basic operations in association in a predetermined storage area (70).
